# EUROPÄISCHE PATENTSCHRIFT

(11) **EP 1 747 841 B1**
(45) Veröffentlichungstag und Bekanntmachung des Hinweises auf die Patenterteilung: **24.11.2010**
(21) Anmeldenummer: 06013316.2
(22) Anmeldetag: 28.06.2006
(51) Int. Cl.: B23P 15/14, B21H 5/00, B23F 13/00

(54) **Vorrichtung zum Herstellen metallischer Bauteile, insbesondere von Zylinderschneckenprofilen, durch rotierende spanende und rollierende Bearbeitung von zylindrischen Rohteilen**
Device for manufacturing metal parts, particularly cylindrical screw profiles, by rotary machining and rolling processing of cylindrical blanks
Dispositif pour la fabrication de pièces métalliques, notamment de profilés cylindriques à vis, par usinage par rotation et laminage d'ébauches cylindriques

(30) Priorität: 27.07.2005 DE 102005035794
(43) Veröffentlichungstag der Anmeldung: 31.01.2007
(73) Patentinhaber: Leistritz Aktiengesellschaft, 90459 Nürnberg (DE)
(72) Erfinder: Theusner, Klaus, 34414 Warburg (DE)
(74) Vertreter: Blaumeier, Jörg

(56) Entgegenhaltungen:
- EP-A- 1 005 939
- CH-A- 390 031
- DE-A1- 10 249 039
- DE-U1- 29 815 125
- JP-A- 6 190 631
- JP-A- 10 175 036
- US-A- 3 521 524
- US-A- 5 221 513
- US-B1- 6 357 994

## Beschreibung

Die Erfindung betrifft eine Vorrichtung zum Herstellen metallischer Bauteile, insbesondere von Zylinderschneckenprofilen, durch rotierende spanende Bearbeitung von zylindrischen Rohteilen.

Das Dokument DE 102 49 039 A1 offenbart eine Vorrichtung gemäss dem Oberbegriff des Anspruchs 1.

Zylinderschneckenprofile, seien es ein- oder mehrgängige Profile, werden vornehmlich für Kleingeräte und kleine Getriebe eingesetzt, beispielsweise im Bereich des Automobilbaus im Rahmen der Lenkung oder bei Fensterhebern. Üblicherweise werden diese Bauteile mit einer ersten Vorrichtung spanend bearbeitet, beispielsweise durch Wirbeln oder Fräsen. In dieser ersten Vorrichtung wird spanend das Grundprofil der Schnecke herausgearbeitet. Anschließend werden diese bearbeiteten Rohlinge über eine Transporteinrichtung oder manuell einer zweiten Nachbearbeitungsvorrichtung zugeführt, in der die aus dem spanenden Bearbeiten resultierenden Mikro- und Submikrorauhigkeiten wie Schuppen oder dergleichen bearbeitet werden. Die Bearbeitung erfolgt hier durch Schleifen oder Glätten. Dieser Finish-Arbeitsgang wird benötigt, um die erhöhten Anforderungen an Laufruhe und Geräuschentwicklung zu erfüllen.

Üblicherweise wird eine Vorrichtung zur Nachbearbeitung über mehrere vorgeschaltete erste Vorrichtungen, in denen die spanende Bearbeitung erfolgt, beschickt, was zu relativ langen Transportwegen führt und umständlich ist.

Der Erfindung liegt damit das Problem zugrunde, eine Vorrichtung anzugeben, die demgegenüber verbessert ist.

Zur Lösung dieses Problems ist eine Vorrichtung mit den Merkmalen des Anspruchs 1 vorgesehen.

Die Erfindung schlägt eine kompakte Bearbeitungsvorrichtung vor, bei der eine spanende Bearbeitungseinrichtung sowie eine Fertigbearbeitungseinrichtung in einem gemeinsamen Vorrichtungsgestell oder -gehäuse integriert sind. Beide sind einander unmittelbar nachgeschaltet und werden von einer gemeinsamen Ladeeinrichtung bedient, die den gesamten Teiletransport vornimmt. Über diese Ladeeinrichtung wird das Rohteil aus einem zugeordneten Rohteilmagazin entnommen und zur ersten Einrichtung gegeben, wo es bearbeitet wird und am Ende des Bearbeitungsschritts über die Ladeeinrichtung entnommen und zur zweiten Einrichtung transportiert wird. Dort erfolgt die Nachbearbeitung zur Oberflächenbehandlung, im Rahmen welcher gegebenenfalls auch eine sehr geringfügige Profilumformung (nicht spanend) im Rahmen einer Nachbearbeitung erfolgen kann, wonach die Ladeeinrichtung das Fertigteil entnimmt und der Fertigteilaufnahme zuführt. Danach beginnt der Zyklus von vorne. Die Ladestation fährt während dieses Zyklus einmal den Bewegungsweg vom Rohteilmagazin zur Fertigteilaufnahme ab und nimmt dabei sämtliche Lade- und Entladetätigkeiten vor.

Die erfindungsgemäße Vorrichtung lässt als äußerst kompakte Arbeitseinheit ein zügiges und genaues Arbeiten zu, nachdem sämtliche aufwändigen Transportwege zu einer externen Nachbearbeitungseinrichtung entfallen, nachdem bei der erfindungsgemäßen Vorrichtung die Oberflächennachbearbeitungseinrichtung integriert ist. Die Integration ermöglicht es, extrem kurze Transportwege über die Ladeeinrichtung zu realisieren, die der Bedienung beider Bearbeitungseinheiten dient.

Besonders zweckmäßig ist es, wenn die Ladeeinrichtung zwei wechselweise in eine Aufnahme- oder Abgabeposition bringbare Teileaufnahmen aufweist. Dies ermöglicht es, dass die Ladeeinrichtung zwei Teile transportiert. In der einen Ladeeinrichtung befindet sich zu beginn des Zyklus ein unbearbeitetes Rohteil, die andere Ladeeinrichtung ist frei. Mit dieser wird das zuvor bearbeitete Rohteil in der ersten Einrichtung gegriffen und dieser entnommen, wonach unmittelbar das noch unbearbeitete Rohteil in diese Einrichtung eingesetzt wird. Sodann verfährt die Ladeeinrichtung zur zweiten Einrichtung zur Oberflächennachbearbeitung und entnimmt das dort hergestellte Fertigteil mit der freien Teileaufnahme, und setzt das in der zweiten Teileaufnahme befindliche, zuvor der ersten Einrichtung entnommene, spanend bearbeitete Rohteil. Anschließend wird das Fertigteil der Fertigteileaufnahme übergeben. Zu diesem Zeitpunkt sind beide Teileaufnahmen leer, so dass im nächsten Zyklus aus dem Rohteilemagazin ein neues Rohteil genommen werden kann. Hierdurch lässt sich also ein extrem einfacher und schneller Lade- und Entladebetrieb und damit Herstellungsbetrieb realisieren. Die Teileaufnahmen der Ladeeinrichtung selbst sind zweckmäßigerweise als einfach Greifer ausgebildet.

Nachdem insbesondere bei der spanenden Bearbeitung das Rohteil relativ hohe Temperaturen aufweist, weist die Ladeeinrichtung zweckmäßigerweise eine Kühleinrichtung zum Kühlen zumindest eines aus der ersten Einrichtung aufgenommenen Rohteils auf, zweckmäßigerweise in Form eines Gebläses, das Kühlluft auf das Rohteil bläst. Zusätzlich oder alternativ ist es auch denkbar, zwischen die erste und die zweite Einrichtung eine gegebenenfalls weitere von der Ladeeinrichtung mit einem aus der ersten Einrichtung aufgenommenen Rohteil anfahrbare Kühleinrichtung zu schalten, die bevorzugt als Kühlbad ausgeführt ist. Während des Bewegungswegs von der ersten zur zweiten Einrichtung wird das warme Rohteil über die Ladeeinrichtung für sehr kurze Zeit beispielsweise in das Kühlbad getaucht, ohne dort abgelegt zu werden, was für eine Kühlung ausreichend ist. Anschließend fährt die Ladeeinrichtung sofort die zweite Einrichtung an. Der intermittierende Stopp an der zweiten Kühleinrichtung beziehungsweise dem Kühlbad ist möglich, nachdem die Bearbeitungszeit in der zweiten Einrichtung zur Oberflächennachbearbeitung deutlich kürzer als die Bearbeitungszeit in der spanenden Bearbeitungseinrichtung ist, sie beträgt ca. die Hälfte bis ein Drittel der Bearbeitungszeit in der ersten Einrichtung, so dass hinreichend Zeit für den zwischengeschalteten Kühlschritt gegeben ist.

Erfindungsgemäß ist die erste Einrichtung ein Wirbelaggregat und die zweite Einrichtung ein Walzenrollieraggregat. Das Wirbeln von Schneckenprofilen ist eine spandende Bearbeitungsart, die auf schnelle und hochgenaue Weise die Herausarbeitung der Schneckengänge ermöglicht, wobei die grundsätzliche Oberflächengüte bereits sehr gut ist. Das Rollieren unter Verwendung der Rollierwalzen in der zweiten Einrichtung lässt nun ohne weiteren Materialabtrag eine Oberflächenveredelung zu, die höchsten Anforderungen entspricht und insbesondere hinsichtlich der Geräuschemission und Lebensdauer beachtliche Vorteile gegenüber anderen abtragenden Verfahren wie beispielsweise dem Schleifen hat. Es sind also zwei äußerst vorteilhafte Bearbeitungsverfahren beziehungsweise Arbeitseinrichtungen, nämlich ein Wirbelaggregat und ein Walzenrollieraggregat, in einer gemeinsamen Vorrichtung kombiniert, so dass qualitativ höchstwertige Fertigteile erhalten werden.

Es ist erfindungsgemäß vorgesehen am Walzenrollieraggregat einen Messwert abzugreifen, der ein Maß für die Qualität der Wirbelbearbeitung ist, wobei die Einstellung des Wirbelwerkzeugs in Abhängigkeit des Messwerts erfolgt. Somit sind also beide Aggregate in einem geschlossenen System, also einem Regelkreis integriert. Über den am Walzenrollieraggregat abgegriffenen Messwert wird ein aussagekräftiges Informationssignal erhalten, das Rückschlüsse auf die Qualität der spanenden Bearbeitung im Wirbelaggregat zulässt, wobei der Wirbelbetrieb in Abhängigkeit der unmittelbar danach erfassten Qualität über den Messwert gesteuert wird. Zweckmäßigerweise wird als Messwert der Vergleichswert aus dem Ist-Zustellweg und dem Soll-Zustellweg der beiden Rollierwalzen des Walzenrollieraggregats bestimmt. Nachdem die Walzen bevorzugt auf NC-Achsen über Kugelgewindetriebe mit Steigung links und Steigung rechts synchron zugestellt werden, kann der Zustellweg äußerst exakt bestimmt werden, so dass etwaige Differenzen zwischen dem Soll-Zustellweg, der gegeben sein muss, wenn die Wirbelbearbeitung optimal erfolgt, und dem Ist-Zustellweg erfasst werden können. Der Zustellweg wird über ein geeignetes Linearbewegungsmesssystem ermittelt. Ergibt sich eine Differenz, so wird der Betrieb des Wirbelaggregats entsprechend nachgeführt beziehungsweise korrigiert, beispielsweise, indem die Wirbelmesser nachgestellt werden, um die Differenz Ist-Soll hinsichtlich des Zustellwegs wieder auszugleichen. Insgesamt kann also in dem geschlossenen System beziehungsweise Regelkreis eine exakte und hochgenaue Qualitätskontrolle erfolgen, wobei auf etwaige Differenzen sofort reagiert werden kann.

Dabei bestehen natürlich auch andere Möglichkeiten, den Messwert als Maß für die Qualität der Wirbelbearbeitung abzugreifen. Denkbar ist beispielsweise der Abgriff der Motorleistung der Walzenzustellmotoren, die natürlich dann unterschiedlich ist, wenn die Walzen über einen längeren Zustellweg zu bewegen sind, oder entsprechende Motordrehmomente. Auch hier erfolgt bevorzugt ein Vergleich mit einem entsprechenden Leistungs- oder Drehmoment-Vergleichswert betreffend den Sollzustand.

Zweckmäßig ist es ferner, wenn anhand des Messwerts beziehungsweise in dessen Abhängigkeit eine Qualifizierung der Fertigteile erfolgt. Ergibt sich keine Ist-Soll-Differenz, arbeitet das Wirbelaggregat folglich innerhalb des gegebenen Toleranzbereichs, ergibt sich eine Differenz, liegt ein nicht korrekter Betrieb vor. Diese Information kann natürlich gleichzeitig zur Qualifizierung des hergestellten Fertigteils, das dann den entsprechenden vorgegebenen Toleranzen nicht entspricht, verwendet werden. Das Teil kann gegebenenfalls über die übergeordnete Steuerungseinrichtung rechnerseitig gekennzeichnet und anschließend ausgeschleust werden.

In diesem Zusammenhang sieht eine vorteilhafte Erfindungsausgestaltung vor, dass die Fertigteileaufnahme ein Fertigteilemagazin, in das ordnungsgemäße Fertigteile eingeführt werden, und ein Ausschussmagazin, in das die Teile, die als nicht-tauglich beispielsweise über den erfassten Messwert einqualifiziert werden, über die gemeinsame Ladeeinrichtung gegeben werden, aufweist, wobei die Teilezufuhr bevorzugt in Abhängigkeit des aufgenommenen Messwerts gesteuert wird. Das heißt, unmittelbar nachdem der Messwert aufgenommen und der Ist-Soll-Vergleich erfolgt, wird über die übergeordnete Steuerungseinrichtung die Ladeeinrichtung entsprechend angesteuert und angewiesen, das Teil entweder im Fertigteilemagazin abzulegen, wenn das Teil in Ordnung ist, oder aber als Ausschuss im Ausschussteilemagazin abzulegen.

Weitere Vorteile, Merkmale und Einzelheiten der Erfindung ergeben sich aus dem im Folgenden beschriebenen Ausführungsbeispiel sowie anhand der Zeichnung. Dabei zeigen:
- Fig. 1: eine Prinzipskizze einer erfindungsgemäßen Vorrichtung beim Entnehmen eines gewirbelten Rohteils und Einsetzen eines zu wirbelnden Rohteils,
- Fig. 2: die Vorrichtung aus Fig. 1 mit der das entnommene, gewirbelte Rohteil vom Wirbelaggregat zum Walzenglättaggregat transportierenden Ladeeinrichtung,
- Fig. 3: die Vorrichtung aus Fig. 2 bei der Entnahme eines zuvor im Walzenglättaggregat geglättetem Fertigteils und Einsetzen des zuvor dem Wirbelaggregat entnommenen gewirbelten Rohteils,
- Fig. 4: die Vorrichtung aus Fig. 3 beim Übergeben des Fertigteils an die Fertigaufnahme und Aufnehmen eines unbearbeiteten Rohteils aus dem Rohteilmagazin, und

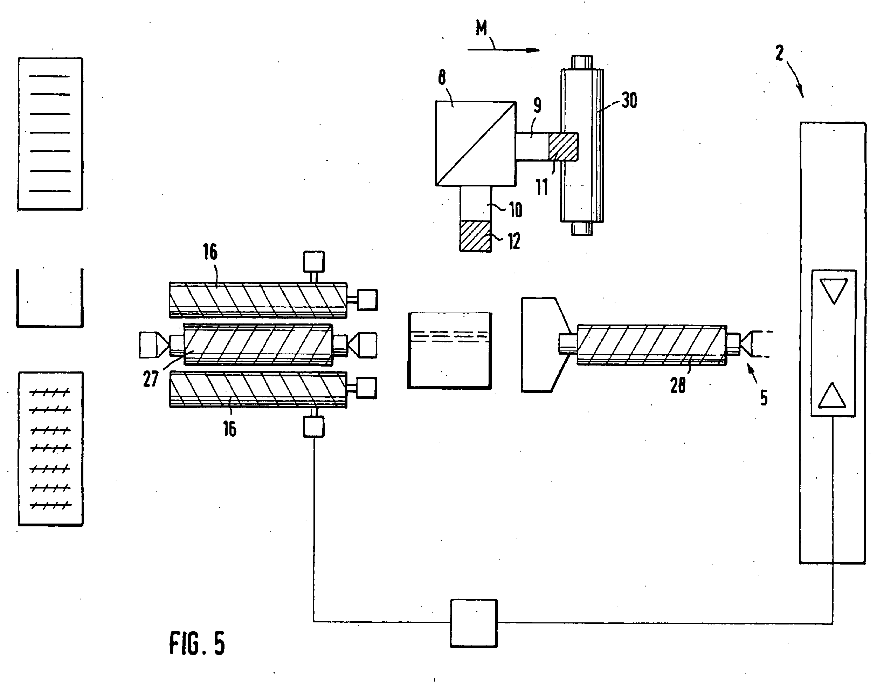

- Fig. 5: die Vorrichtung aus Fig. 4 während des Transports des aufgenommenen, zu wirbelnden Rohteils zum Wirbelaggregat.

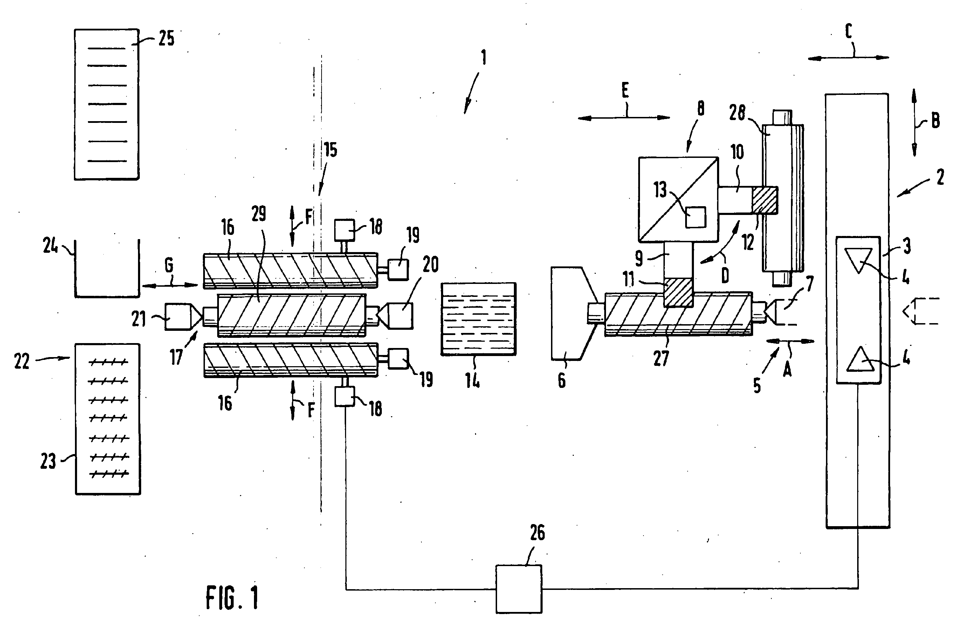

Fig. 1 zeigt in Form einer Prinzipskizze die erfindungsgemäße Vorrichtung 1. Diese ist nur mit ihren zentralen Komponenten, die nur prinzipiell dargestellt sind, gezeigt, soweit die Elemente für das Verständnis des Aufbaus und der Funktion der erfindungsgemäßen Vorrichtung erforderlich sind. Sonstige Komponenten wie das gemeinsame Vorrichtungsgestell oder -gehäuse, Antriebe, Linearführungen, Versorgungsleitungen etc. sind der Übersichtlichkeit halber nicht näher dargestellt.

Die erfindungsgemäße Vorrichtung 1 besteht aus einem Wirbelaggregat 2, hier einem Außenwirbelaggregat, mit einem Wirbelring 3 mit am im Umfang angeordneten Wirbelwerkzeugen 4. Ein solches Wirbelaggregat ist dem Grunde nach in seinem Aufbau und seiner Funktion bekannt. Der Wirbelring 3 rotiert mit hoher Geschwindigkeit um seine mittlere Achse, während welcher Rotationsbewegung die Wirbelwerkzeuge 4 am zu bearbeitenden Bauteil unter Spanabtrag angreifen. Das Wirbelaggregat 2 ist horizontal wie vertikal beweg- oder verstellbar, wie durch die Doppelpfeile B, D angedeutet ist, sowie um eine Vertikalachse schwenkbar.

Dem Wirbelaggregat 3 zugeordnet ist eine Halteeinrichtung 5, bestehend aus einem positionsfesten Spanfutter 6 und einem wie durch den Doppelpfeil A dargestellten Reitstock 7, der, wie die gestrichelte Darstellung in Fig. 1 zeigt, relativ weit verfahrbar ist, um zu bearbeitende Teile unterschiedlicher Länge spanen zu können.

Gezeigt ist ferner eine Ladeeinrichtung 8, hier als Doppelladeeinrichtung ausgeführt, die zwei Teileaufnahmen 9, 10 aufweist, die jeweils als Greifer ausgebildet sind beziehungsweise Greifeinrichtungen 11, 12 aufweisen. Mit diesen Greifeinrichtungen 11, 12 werden die zu transportierenden Bauteile aufgenommen. Die Ladeeinrichtung 8 ist mit ihren Teileaufnahmen 9, 10 beweglich, wie durch den Doppelpfeil D dargestellt ist. Das heißt, beide Teileaufnahmen können zwischen den in Fig. 1 gezeigten Vertikal- und Horizontalpositionen wechselweise verstellt werden. Dies erfolgt im gezeigten Beispiel durch Verdrehen, es ist also ein schwenkbarer Doppelgreifer ausgeführt. Selbstverständlich kann auch ein Drehgreifer oder parallel angeordneter Doppelgreifer mit zwei hintereinander angeordneten, parallelen Teileaufnahmen verwendet werden. Auch eine Ausbildung der Ladeeinrichtung als Gelenkarm oder Knickarm-Roboter ist denkbar. Die Ladeeinrichtung ist, wie durch den Doppelpfeil E dargestellt, über eine nicht näher gezeigte Linearführung horizontal bewegbar.

An der Ladeeinrichtung ist ferner eine Kühleinrichtung 13 vorgesehen, hier ein Gebläse, das dazu dient, Kühlluft einem dem Wirbelaggregat 2 entnommenen, gerade zuvor bearbeiteten Rohteil zum Kühlen zuzuführen.

Dem Wirbelaggregat 2 samt seiner Spanneinrichtung 5 ist eine weitere Kühleinrichtung 14, hier dargestellt in Form eines Kühlbades, nachgeschaltet. Diese Kühleinrichtung 14 kann über die Ladeeinrichtung 8 angefahren werden, so dass es möglich ist, das noch warme, in dem Wirbelaggregat 2 bearbeitete Rohteil gegebenenfalls zusätzlich in dem Kühlbad kurzfristig abzukühlen.

Die erfindungsgemäße Vorrichtung 1 umfasst ferner ein Walzenrollieraggregat 15, bestehend aus zwei Rollierwalzen 16, die wie durch die Doppelpfeile gezeigt bezüglich der Spanneinrichtung 17, in der ein zu bearbeitendes Bauteil aufgenommen ist, zugestellt werden können, siehe die Doppelpfeile F. Hierzu ist jede Rollierwalze 16 mit jeweils einem Zustellmotor 18 verbunden, wobei beide Rollierwalzen 16 mittels eines Kugelgewindetriebs synchron zugestellt werden können. Zum Antrieb der Rollierwalzen 16 ist ferner jede mit einem Antriebsmotor 19 verbunden.

Die Halteeinrichtung 17 besteht auch hier aus einem feststehenden Spannfutter 20 sowie einem wie durch den Doppelpfeil G dargestellten beweglichen Reitstock 21, der zum Spannen beziehungsweise Lösen bewegt wird.

Weiterhin vorgesehen ist eine dem Walzenrollieraggregat 15 nachgeschaltete Fertigteileaufnahme 22, umfassend ein Fertigteilmagazin 23, in das Rohteile aufgenommen werden, sowie eine Ausschussteileaufnahme 24, in die Ausschussteile aufgenommen werden. Die Be- und Entladung des Walzenrollieraggregats 15 erfolgt selbstverständlich ebenfalls über die Ladeeinrichtung 8, wie natürlich auch die Abgabe der in dem Walzenrollieraggregat 15 bearbeiteten Fertigteile an die Fertigteilaufnahme 22 ausschließlich automatisch über die Ladeeinrichtung 8 erfolgt.

Vorgesehen ist ferner ein Rohteilmagazin 25, in dem noch unbearbeitete Rohteile aufgenommen sind. Das Rohteilmagazin 25 wird ebenfalls über die Ladeeinrichtung 8 angefahren, diese entnimmt ein zu bearbeitendes Rohteil über einen Greifer und transportiert dieses Rohteil zum Wirbelaggregat 2, worauf nachfolgend noch eingegangen wird.

Gezeigt ist ferner exemplarisch eine übergeordnete Steuerungseinrichtung 26, die im gezeigten Beispiel zum einen mit einem oder den beiden Zustellmotoren 18, zum anderen mit dem Wirbelring 3 beziehungsweise der Zustelleinrichtung für die Wirbelwerkzeuge 4 kommuniziert. Über den oder die Zustellmotoren 18 wird ein Messsignal aufgenommen, das ein Maß dafür darstellt, wie weit der Zustellweg ist, über den die beiden Rollierwalzen 16 bis in ihre Arbeitsanlage an das zu bearbeitende Rohteil bewegt wurden. Dieser Messwert stellt also ein Maß für die Qualität der Wirbelbearbeitung dar, da der Zustellweg beispielsweise umso kürzer ist, je stärker der Verschleiß an den Wirbelwerkzeugen 4 ist, beziehungsweise wenn diese nicht ordnungsgemäß nachgestellt wurden. In einem Regelkreis erfolgt nun in Abhängigkeit dieses Messwerts über die Steuerungseinrichtung 26 gesteuert die automatische Zustellung der Wirbelwerkzeuge 4, so dass also kontinuierlich und unmittelbar auf eine etwaige gegebene Toleranzen überschreitende Unregelmäßigkeit reagiert werden kann. An dieser Stelle ist darauf hinzuweisen, dass die Aufnahme des Messwerts nicht zwangsläufig über die Zustellmotoren erfolgen muss. Selbstverständlich kann auch ein Abgriff über die mechanische Zustelleinrichtung, also die beschriebenen Kugelgewindegetriebe, über die die Walzen synchron bewegt werden, erfolgen. Generell ist über die Steuerungseinrichtung jedweder Messwert abgreifbar beziehungsweise verarbeitbar, der eben ein Maß für die Qualität der Wirbelbearbeitung darstellt und der im Rahmen des geschlossenen Systems beziehungsweise des Regelkreises zur Steuerung des Betriebs des Wirbelaggregats 2 beziehungsweise der Werkzeugzustellung verwendet werden kann.

Fig. 1 zeigt den Zustand der erfindungsgemäßen Vorrichtung, bei dem ein in dem Wirbelaggregat 2 gewirbeltes Rohteil 27 fertig gewirbelt ist und über die Ladeeinrichtung 8 entnommen werden soll. Hierzu hat der Greifer 11 am Rohteil 27 angegriffen. Zum Entnehmen fährt der Reitstock 7 in eine Lösestellung, das Bearbeitete Rohteil 27 wird damit freigegeben. In der zweiten Teileaufnahme 10 beziehungsweise am zweiten Greifer 12 befindet sich ein unbearbeitetes, nachfolgend aber zu bearbeitendes Rohteil 28, das zuvor dem Rohteilmagazin 25 entnommen wurde. Dieses wird nun in die Spanneinrichtung 5 eingesetzt, indem die Ladeeinrichtung 8, die hier wie beschrieben als schwenkbarer Doppelgreifer ausgeführt ist, um die entsprechende Drehachse dreht, so dass die Teileaufnahme 10 in die Stellung gebracht wird, in der sich die Teileaufnahme 9 befindet, während die Teileaufnahme 9 aus dieser in Fig. 1 gezeigten Stellung unter Mitnahme des gegriffenen Rohteils 27 bewegt wird. Anschließend fährt der Reitstock 5 wieder in die Spannstellung, wonach der Greifer 12 gelöst wird und das zu bearbeitende Rohteil 28 freigegeben wird.

Wie Fig. 1 ferner zeigt, befindet sich in dem Walzenrollieraggregat 15 ein zuvor im Wirbelaggregat 2 gewirbeltes Rohteil, das nunmehr, nachdem der Rollierwalzprozess zum Nachbearbeiten bzw. Glätten der Oberfläche des Rohteils bereits abgeschlossen ist, als Fertigteil 29 vorliegt, jedoch über die Spanneinrichtung 17 nach wie vor gespannt ist.

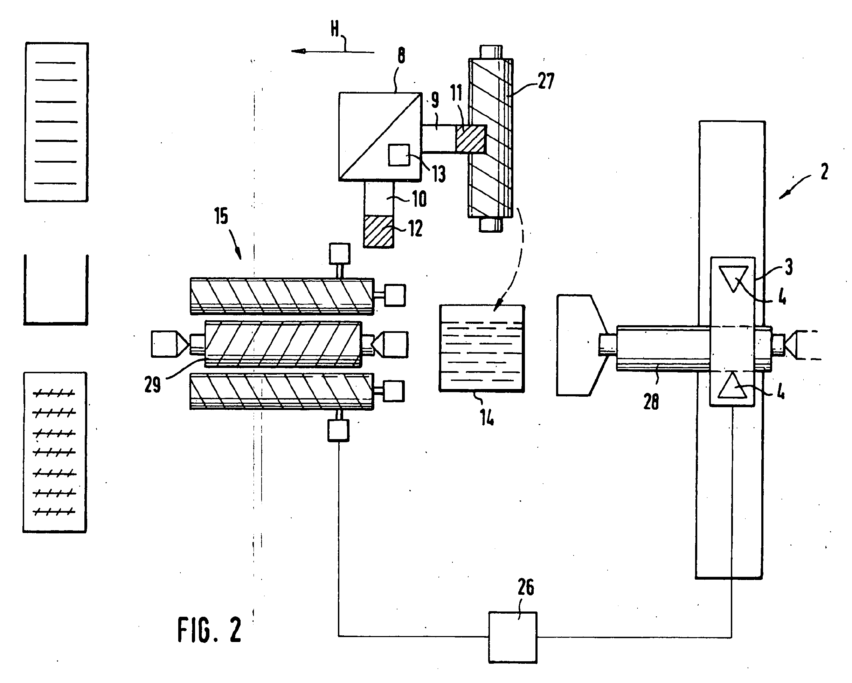

Im nächsten Schritt, siehe Fig. 2, bewegt sich nun, wie durch den Pfeil H dargestellt ist, die Ladeeinrichtung 8 vom Wirbelaggregat 2 in Richtung des Walzenglättaggregats 15. Das Wirbelaggregat 2 beginnt seine Arbeit, das heißt, der Wirbelring 3 rotiert, die Wirbelwerkzeuge 4 schneiden den gewünschten Schneckengang in das gesetzte Rohteil 28.

Während der Bewegung vom Wirbelaggregat 2 zum Walzenrollieraggregat 15 besteht die Möglichkeit, das vom Wirbeln her warme gewirbelte Rohteil 27 kurz in der Kühleinrichtung 14 abzukühlen, sofern die Kühlung über die Ladeeinrichtung seitliche Kühleinrichtung 13 nicht ausreicht. Hierzu verharrt die Ladeeinrichtung 8 in einer entsprechenden Position oberhalb der Kühleinrichtung 14 und schwenkt das gewirbelte Rohteil 27 kurz in das Kühlbad, um es sofort danach wieder herauszunehmen. Alternativ kann die Kühleinrichtung 14 das Rohteil 27 abspritzen, ohne dass dieses bewegt werden muss. Sofern eine solche Kühleinrichtung 14 nicht vorgesehen ist, verfährt die Ladeeinrichtung 8 in der in Fig. 2 gezeigten Stellung zum Walzenrollieraggregat 15. Ersichtlich befindet sich die Teileaufnahme 10 mit dem freien Greifer 12 in einer zum Walzenrollieraggregat 15 zugewandten Stellung.

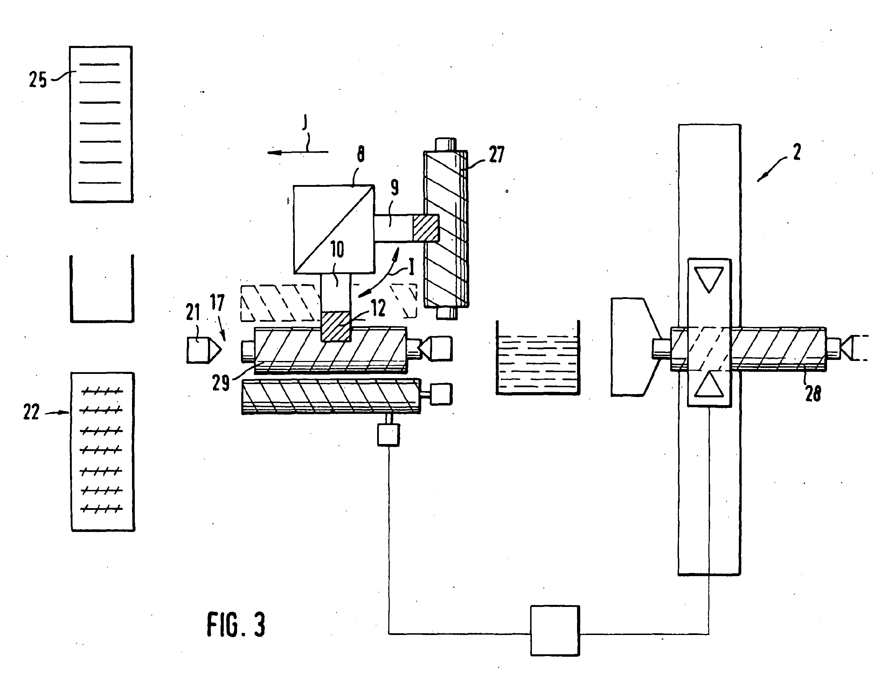

In dieser erfolgt nun, siehe Fig. 3, die Aufnahme des dort hergestellten Fertigteils 29. In Fig. 3 ist der Übersichtlichkeit halber die obere Rollierwalze 16 nur angedeutet. An dieser Stelle ist zu erwähnen, dass die beiden Rollierwalzen 16 bevorzugt einander horizontal gegenüberliegend angeordnet sind, die Figuren zeigen die beiden Walzen lediglich aus Übersichtlichkeitsgründen vertikal übereinander angeordnet. Nach Angriff des Greifers 12 am Fertigteil 29 wird der Reitstock 21 in eine Lösestellung bewegt. Anschließend wird das Fertigteil 29 aus der Spanneinrichtung 17 bewegt, während gleichzeitig das in ihr zu bearbeitende, zuvor dem Wirbelaggregat 2 entnommene Rohteil 27 in die Spanneinrichtung 17 geführt und durch Zurückbewegen des Reitstocks 21 gespannt wird (siehe Pfeil I). Nach dieser Entnahme und Neubeschickung verfährt nun die Ladeeinrichtung 8 in Richtung des Pfeils J zur Fertigteilaufnahme 22 beziehungsweise zum Rohteilmagazin 25, worauf nachfolgend eingegangen wird.

Wie Fig. 3 ferner zeigt, ist während dieses Wechsels der Wirbelvorgang bereits weitgehend abgeschlossen, das Wirbelaggregat 2 befindet sich am hinteren Ende des nunmehr gewirbelten Rohteils 27.

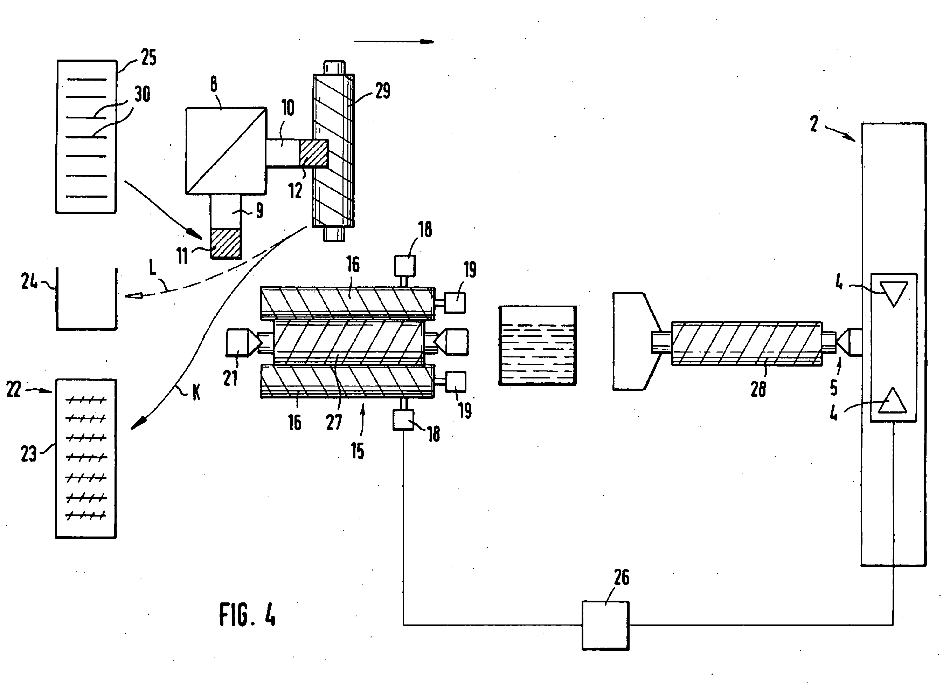

Fig. 4 zeigt nun die Situation nach dem Wechsel innerhalb des Walzenrollieraggregats 15 beziehungsweise während der Fertigteilabgabe und Rohteilaufnahme. Das zuvor in das Walzenrollieraggregat 15 gesetzte, zu walzende Rohteil 27 ist wie ausgeführt gespannt, die beiden Rollierwalzen 16 wurden über die Zustellmotoren 18 und die Gewindetriebe etc. zugestellt. Gleichzeitig wird hierbei wie bereits beschrieben der Messwert abgegriffen und der Steuerungseinrichtung 26 gegeben, die gegebenenfalls eine Nachstellung der Wirbelwerkzeuge 4 im Rahmen des Regelkreises vornimmt. Selbstverständlich kann über die Steuerungseinrichtung 26 auch eine Information ausgegeben werden, sofern eine entsprechende Zustellung nicht mehr möglich ist, das heißt, es wird ein Signal gegeben, dass beispielsweise die Werkzeuge auszutauschen sind etc. Es erfolgt damit also eine Betriebs- und Qualitätsüberwachung.

Während, über die Motoren 19 angetrieben, die Rollierwalzen 16 das Rohteil 27 oberflächlich nachbearbeiten und glätten, also Fertigteilwalzen, erfolgt zum einen die Abgabe des Fertigteils 29, das der Fertigteilaufnahme 22 zugeführt wird. Sofern während der Rollierwalzbearbeitung des Teils 29 in dem Walzenrollieraggregat 15 der dabei aufgenommene Messwert anzeigt, dass das Fertigteil 29 korrekt beziehungsweise toleranzentsprechend gewirbelt wurde, wird das Fertigteil 29 in das Fertigteilmagazin 23 automatisch über die Ladeeinrichtung 8 gegeben, selbstverständlich sind die entsprechenden Einrichtungen über die Ladeeinrichtung 8 entsprechend anfahrbar. Dies ist durch den Pfeil K dargestellt. Sollte es sich um ein Ausschussteil handeln, was über den Messwert ebenfalls festgestellt werden kann, wird das Fertigteil 29 als Ausschussteil in die Ausschussaufnahme 24 gegeben, wie durch den gestrichelten Pfeil L dargestellt ist.

Gleichzeitig wird über Teileaufnahme 9 beziehungsweise den freien Greifer 11 ein Rohteil 30 aus dem Rohteilmagazin 25, das natürlich ebenfalls über die Ladeeinrichtung angefahren werden kann, gegriffen. Anschließend verfährt die Ladeeinrichtung 8, wie durch den Pfeil M dargestellt ist, wieder zum Wirbelaggregat 2, das den Betrieb bereits eingestellt hat, nachdem das Rohteil 28 nunmehr fertiggewirbelt ist. Der Wirbelring beziehungsweise das Wirbelaggregat befindet sich in der Ruhestellung. Auch der Rollierprozess, der verglichen mit der Wirbeldauer nur ca. die Hälfte oder ein Drittel der Zeit benötigt, ist bereits abgeschlossen, die beiden Rollierwalzen 16 sind über die Zustellmotoren beziehungsweise die Zustellmechanik wieder in die vom nunmehr als Fertigteil ausgeführten Teil 27 entfernte Position bewegt werden. Es schließt sich nun im nächsten Schritt der in Fig. 1 gezeigte Wechselprozess an, indem das gewirbelte Rohteil 28 über die Teileaufnahme 10 beziehungsweise den Greifer 12 gegriffen und entnommen wird, wonach das zu bearbeitende Rohteil 30 in die Spanneinrichtung 5 gesetzt wird.

Während in den Figuren die Ladeeinrichtung 6 eine reine Linearbewegung in einer Hin- und einer Rückrichtung durchführt, ist es selbstverständlich auch denkbar, die Ladeeinrichtung längs einer beliebigen Strecke von dem Wirbelaggregat 2 zum Walzenrollieraggregat 15 zu führen, je nach dem, wie die beiden Aggregate bezüglich einander positioniert sind. Es ist denkbar, ein im Wirbelaggregat gewirbeltes Teil zunächst in einer Vertikalbewegung anzuheben, um es dann in einer Horizontalbewegung dem Walzenrollieraggregat zuzuführen, etc.

## Patentansprüche

1. Vorrichtung zum Herstellen metallischer Bauteile, insbesondere von Zylinderschneckenprofilen, durch rotierende spanende Bearbeitung von zylindrischen Rohteilen, umfassend eine erste Einrichtung (2) zum spanenden Bearbeiten des gespannten Rohteils (27, 28), eine dieser nachgeschaltete zweite Einrichtung (15) zur Oberflächennachbearbeitung des bearbeiteten Rohteils (29, 27) zur Bildung eines Fertigteils, sowie eine Ladeeinrichtung (8), mittels der ein Rohteil (30) aus einem zugeordneten Rohteilmagazin (25) zur ersten Einrichtung (2), ein in dieser bearbeitetes Rohteil (27) zur zweiten Einrichtung (5) und ein in dieser hergestelltes Fertigteil zu einer Fertigteilaufnahme (22) transportierbar ist, **dadurch gekennzeichnet, dass** die erste Einrichtung ein Wirbelaggregat (2) und die zweite Einrichtung ein Walzenrollieraggregat (15) ist, und dass am Walzenrollieraggregat (15) ein Messwert abgegriffen wird, der ein Maß für die Qualität der Wirbelbearbeitung ist, wobei die Einstellung des Wirbelwerkzeugs (4) in Abhängigkeit des Messwerts erfolgt.

2. Vorrichtung nach Anspruch 1, **dadurch gekennzeichnet, dass** die Ladeeinrichtung (8) zwei wechselweise in eine Aufnahme- oder Abgabeposition bringbare Teileaufnahmen (9, 10) aufweist.

3. Vorrichtung nach Anspruch 1 oder 2, **dadurch gekennzeichnet, dass** eine Teileaufnahme (9, 10) der Ladeeinrichtung (8) als Greifer (11, 12) ausgebildet ist.

4. Vorrichtung nach einem der vorangehenden Ansprüche, **dadurch gekennzeichnet, dass** an der Ladeeinrichtung (8) eine Kühleinrichtung (13) zum Kühlen zumindest eines aus der ersten Einrichtung (2) aufgenommenen Rohteils vorgesehen ist.

5. Vorrichtung nach Anspruch 4, **dadurch gekennzeichnet, dass** die Kühleinrichtung (13) ein Gebläse ist.

6. Vorrichtung nach einem der vorangehenden Ansprüche, **dadurch gekennzeichnet, dass** zwischen die erste und die zweite Einrichtung (2, 5) eine gegebenenfalls weitere von der Ladeeinrichtung (8) mit einem aus der ersten Einrichtung (2) aufgenommenen Rohteil anfahrbare Kühleinrichtung (14) zwischengeschaltet ist.

7. Vorrichtung nach Anspruch 6, **dadurch gekennzeichnet, dass** die Kühleinrichtung (14) ein Kühlbad ist.

8. Vorrichtung nach einem der vorangehenden Ansprüche, **dadurch gekennzeichnet, dass** der Messwert ein Vergleichswert aus dem Ist-Zustellweg und dem Soll-Zustellweg der beiden Rollierwalzen (16) des Walzenrollieraggregats (15) ist.

9. Vorrichtung nach Anspruch 8, **dadurch gekennzeichnet, dass** in Abhängigkeit des Messwerts eine Qualfizierung der Fertigteile erfolgt.

10. Vorrichtung nach einem der vorangehenden Ansprüche, **dadurch gekennzeichnet, dass** die Fertigteilaufnahme (22) ein Fertigteilmagazin (23) und ein Ausschussmagazin (24) aufweist, die beide über die Ladeeinrichtung (8) bedienbar sind.

11. Vorrichtung nach Anspruch 9 und 10, **dadurch gekennzeichnet, dass** die Teilezufuhr in Abhängigkeit des aufgenommenen Messwerts gesteuert wird.

## Claims

1. A device for manufacturing metal parts, in particular, cylindrical screw profiles, through rotary machining of cylindrical blanks, comprising a first device (2) for the machining of the clamped blank (27, 28), a second device (15) disposed downstream of the former for surface finishing of the machined blank (29, 27) in order to form a finished part, and a loading device (8), by means of which a blank (30) can be transported from an associated blank magazine (25) to the first device (2); a blank (27) machined in the latter can be transported to the second device (5); and a finished part manufactured in the latter can be transported to a finished-part retainer (22),
**characterised in that**
the first device is a whirling machine (2) and the second device is a roller finishing machine (15), and
that a measured value, which is a measure for the quality of the whirling is picked up on the roller finishing machine (15), wherein the adjustment of the whirling tool (4) is implemented dependent upon the measured value.

2. The device according to claim 1,
**characterised in that**
the loading device (8) provides two part retainers (9, 10) capable of being brought alternately into a receiving position or a delivery position.

3. The device according to claim 1 or 2,
**characterised in that**
a part retainer (9, 10) of the loading device (8) is formed as a grab (11, 12).

4. The device according to any one of the preceding claims,
**characterised in that**
a cooling device (13) for cooling at least one of the blanks taken up from the first device (2) is provided on the loading device (8).

5. The device according to claim 4,
**characterised in that**
the cooling device (13) is a fan.

6. The device according to any one of the preceding claims,
**characterised in that**,
an optional further cooling device (14) capable of being moved from the loading device (8) with a blank received from the first device (2) is disposed in an intermediate position between the first and the second device (2, 5)

7. The device according to claim 6,
**characterised in that**
the cooling device (14) is a cooling bath.

8. The device according to any one of the preceding claims,
**characterised in that**
the measured value is a comparative value from the actual actuation path and the set actuation path of the two finishing rollers (16) of the roller finishing machine (15).

9. The device according to claim 8,
**characterised in that**
a qualification of the finished parts is implemented dependent upon the measured value.

10. The device according to any one of the preceding claims,
**characterised in that**
the finished part retainer (22) comprises a finished part magazine (23) and a reject magazine (24), both of which can be operated via the loading device (8).

11. The device according to claim 9 and 10,
**characterised in that**
the supply of parts is controlled dependent upon the recorded measured value.

## Revendications

1. Dispositif pour la fabrication de pièces métalliques, en particulier des profils de vis sans fin cylindriques, par l'usinage rotatif par enlèvement de copeaux d'ébauches cylindriques, comportant une première unité (2) destinée à l'usinage par enlèvement de copeaux de l'ébauche (27, 28) montée, une deuxième unité (15), montée en aval de ladite première unité et destinée à l'usinage de rectification de la surface de l'ébauche (29, 27) usinée, en vue de la formation d'une pièce finie, ainsi qu'une unité de chargement (8), qui permet de transporter une ébauche (30) hors d'un magasin d'ébauches (25) associé vers la première unité (2), une ébauche (27), usinée dans cette dernière, vers une deuxième unité (5) et une pièce finie, réalisée dans cette dernière, vers une unité de réception de pièces finies (22), **caractérisé en ce que** la première unité est un organe à mouvement circulaire (2) et la deuxième unité est un organe de roulage par cylindre (15), et **en ce qu'**une valeur de mesure est prélevée sur l'organe de roulage par cylindre (15), laquelle est un critère pour la qualité de l'usinage par mouvement circulaire, le réglage de l'outil à mouvement circulaire (4) étant effectué en fonction de la valeur de mesure.

2. Dispositif selon la revendication 1, **caractérisé en ce que** l'unité de chargement (8) comporte deux éléments de réception des pièces (9, 10), qui peuvent être amenés alternativement dans une position de réception ou une position de transfert.

3. Dispositif selon la revendication 1 ou 2, **caractérisé en ce qu'**un élément de réception des pièces (9, 10) de l'unité de chargement (8) est réalisé sous la forme d'un organe de préhension (11, 12).

4. Dispositif selon l'une quelconque des revendications précédentes, **caractérisé en ce que** sur l'unité de chargement (8) est prévue une unité de refroidissement (13) destinée à refroidir au moins une ébauche reçue à partir de la première unité (2).

5. Dispositif selon la revendication 4, **caractérisé en ce que** l'unité de refroidissement (13) est un ventilateur.

6. Dispositif selon l'une quelconque des revendications précédentes, **caractérisé en ce qu'**entre la première et la deuxième unité (2, 5) est intercalée, le cas échéant, une autre unité de refroidissement (14) contre laquelle peut accoster l'unité de chargement (8) munie d'une ébauche chargée à partir de la première unité (2).

7. Dispositif selon la revendication 6, **caractérisé en ce que** l'unité de refroidissement (14) est un bain de refroidissement.

8. Dispositif selon l'une quelconque des revendications précédentes, **caractérisé en ce que** la valeur de mesure est une valeur comparative formée à partir de la distance d'approche réelle et de la distance d'approche théorique des deux cylindres de roulage (16) de l'organe de roulage (15).

9. Dispositif selon la revendication 8, **caractérisé en ce qu'**une qualification des pièces finies est effectuée en fonction de la valeur de mesure.

10. Dispositif selon l'une quelconque des revendications précédentes, **caractérisé en ce que** le dispositif de réception des pièces finies (22) comporte un magasin de pièces finies (23) et un magasin de pièces rebutées (24), qui sont tous deux propres à être desservis par l'unité de chargement (8).

11. Dispositif selon les revendications 9 et 10, **caractérisé en ce que** l'acheminement des pièces est commandé en fonction de la valeur de mesure enregistrée.
